# EUROPEAN PATENT APPLICATION

(11) **EP 3 477 525 A1**
(43) Date of publication of application: **01.05.2019**
(21) Application number: 16906141.3
(22) Date of filing: 29.11.2016
(51) Int. Cl.: G06F 21/60

(54) **METHOD AND TERMINAL FOR PROTECTING KEYWORD IN COMMUNICATION INFORMATION**

(30) Priority: 23.06.2016 CN 201610465439
(71) Applicant: ZTE Corporation, Shenzhen, Guangdong 518057 (CN)
(72) Inventor: ZHU, Yong, Shenzhen Guangdong 518057 (CN)
(74) Representative: Studio Torta S.p.A.
(86) International application number: PCT/CN2016/107734
(87) International publication number: WO 2017/219602

(57) **Abstract**

Disclosed is a method for protecting a keyword in communication information, comprising: separating, when it is determined that a keyword exists in first communication information, the keyword from the first communication information and replacing the keyword with an alternate word, and storing the keyword on a dedicated storage unit for a trusted execution environment operating system (TEE OS); forming non-keywords in the first communication information and the alternate word into second communication information at least comprising position information of the keyword on the storage unit and marker information of the keyword; presenting the second communication information by means of a rich execution environment operating system (REE OS); extracting, when determining to view the keyword, the keyword on the dedicated storage unit for the TEE OS; and presenting the keyword by means of the TEE OS. Also disclosed is a terminal for protecting a keyword in communication information.

## Description

### TECHNICAL FIELD

The embodiments of the present disclosure relate to security technologies for communication information of terminals, and more particularly, to a method and a terminal for protecting a keyword in communication information.

### BACKGROUND

With the progress of science and technology, smart phones have become an indispensable part of daily life, and are inseparable from work, study or life.

There are some important keywords in short messages of the smart phones, such as short message verification codes issued by banks, and some malicious software existing in operating systems of the smart phones can intercept the short messages, so as to intercept the verification codes and steal the bank funds of users when the users are not aware of this, thus causing great losses to the users.

The existing method of protecting keywords in the short messages is to encrypt the short messages through encryption technology, and then display the encrypted short messages through the smart phones to prevent the keywords in the short messages from leaking. However, the encrypted short messages can still be intercepted, or there is still a possibility of being cracked, resulting in protection failure and keywords in the message being stolen.

### SUMMARY

In light of this, it is expected to provide a method and a terminal for protecting a keyword in communication information by the embodiments of the present disclosure, so as to thoroughly cut off the possibility of stealing the keywords in the communication information by malicious software.

To achieve the above objects, the technical solutions of the embodiments of the present disclosure are implemented as follows.

According to a first aspect, the embodiments of the present disclosure provide a method for protecting a keyword in communication information, including:
when determining that a keyword exists in first communication information, separating the keyword from the first communication information and replacing the keyword with an alternate word, and storing the keyword on a dedicated storage unit for a trusted execution environment operating system TEE OS;
forming a non-keyword in the first communication information and the alternate word into second communication information, the second communication information at least including position information of the keyword on the storage unit and marker information of the keyword;
presenting the second communication information through a rich execution environment operating system REE OS;
extracting, when determining to view the keyword, the keyword on the dedicated storage unit for the TEE OS; and
presenting the keyword through the TEE OS.

In the foregoing solution, the method, before the determining that the keyword exists in the first communication information, further includes:
determining whether the first communication information is received, and if determining that the first communication information is received, determining whether the keyword exists in the first communication information according to a preset keyword library.

In the foregoing solution, the determining whether the keyword exists in the first communication information according to the preset keyword library includes:
determining whether a content in the first communication information is matched with a content in the preset keyword library, and if the content in the first communication information is matched with the content in the preset keyword library, determining the content in the first communication information matched with the preset keyword library as the keyword, and determining a content in the first communication information not matched with the preset keyword library as the non-keyword; and
if no content in the first communication information is matched with the content in the preset keyword library, determine that no keyword exists in the first communication information, and determine the content in the first communication information as the non-keyword.

In the foregoing solution, the method, after the determining whether the keyword exists in the first communication information according to the preset keyword library, further includes: when determining that no keyword exists in the first communication information, presenting the first communication information through the REE OS.

In the foregoing solution, the presenting the keyword through the TEE OS includes: replacing the alternate word in the second communication information with the keyword, and presenting the keyword through the TEE OS.

According to a second aspect, the embodiments of the present disclosure provide a terminal for protecting a keyword in communication information, including:
a separation module configured to, when determining that a keyword exists in first communication information, separate the keyword from the first communication information and replace the keyword with an alternate word, and store the keyword on a dedicated storage unit for a trusted execution environment operating system TEE OS;
a formation module configured to form a non-keyword in the first communication information and the alternate word into second communication information, the second communication information at least including position information of the keyword on the storage unit and marker information of the keyword;
a presentation module configured to present the second communication information through a rich execution environment operating system REE OS; and
an extraction module configured to extract, when determining to view the keyword, the keyword on the dedicated storage unit for the TEE OS;
the presentation module being further configured to present the keyword through the TEE OS.

In the foregoing solution, the terminal further includes:
a determination module configured to determine whether the first communication information is received, and if determining that the first communication information is received,
determine whether the keyword exists in the first communication information according to a preset keyword library.

In the foregoing solution, the determination module is configured to determine whether a content in the first communication information is matched with a content in the preset keyword library, and if the content in the first communication information is matched with the content in the preset keyword library, determine the content in the first communication information matched with the preset keyword library as the keyword, and determine a content in the first communication information not matched with the preset keyword library as the non-keyword; and
if no content in the first communication information is matched with the content in the preset keyword library, determine that no keyword exists in the first communication information, and determine the content in the first communication information as the non-keyword.

In the foregoing solution, the presentation module is further configured to, when determining that no keyword exists in the first communication information, present the first communication information through the REE OS.

In the foregoing solution, the presentation module is further configured to replace the alternate word in the second communication information with the keyword, and present the keyword through the REE OS.

The embodiments of the present disclosure further provide a computer storage medium which may store an execution instruction, wherein the execution instruction is configured to execute the method for protecting a keyword in communication information in the foregoing embodiments.

According to the method and the terminal for protecting a keyword in communication information provided by the embodiments of the present disclosure, when determining that the keyword exists in the first communication information, the keyword is separated from the first communication information, replaced with the alternate word, and stored on the dedicated storage unit for the trusted execution environment operating system TEE OS; the non-keyword in the first communication information and the alternate word are formed into the second communication information, the second communication information is presented through the rich execution environment operating system REE OS; when determining to view the keyword, the keyword on the dedicated storage unit for the TEE OS is extracted; and the keyword is presented through the TEE OS; therefore, the keyword in the communication information can be only stored and read in the TEE OS; because the TEE OS is solidified in the terminal while delivery and cannot be modified when in use, the TEE OS cannot be modified by the malicious software; in this way, even if the REE OS is controlled by the malicious software, the keyword in the communication information cannot be stolen, thus thoroughly cutting off the possibility of stealing the keyword in the communication information by the malicious software.

### BRIEF DESCRIPTION OF THE DRAWINGS

Fig. 1 is a flow chart of a first embodiment of a method for protecting a keyword in communication information according to the present disclosure;
Fig. 2 is a flow chart of a second embodiment of a method for protecting a keyword in communication information according to the present disclosure;
Fig. 3 is a structural schematic diagram of an embodiment of a terminal for protecting a keyword in communication information according to the present disclosure; and
Fig. 4 is a structural schematic diagram of an embodiment of a device for protecting a keyword in communication information according to the present disclosure.

### DETAILED DESCRIPTION

The technical solutions in the embodiments of the present disclosure will be clearly and completely described below with reference to the accompanying drawings in the embodiments of the present disclosure.

A method for protecting a keyword in communication information according to the present disclosure may be implemented on a terminal for protecting a keyword in communication information. The terminal may include a mobile terminal such as a mobile phone, a smart phone, a notebook computer, a digital broadcast receiver, a Personal Digital Assistant (PDA), a tablet (PAD), a Portable Multimedia Player (PMP), a navigation device, and the like.

The terminal needs to support a Trusted Execution Environment (TEE) and a Rich Execution Environment (REE). The TEE and the REE may be isolated at a physical layer so that some memory, some memory and other devices may only be accessed by a TEE Operating System (TEE OS) on the TEE, but cannot be accessed by a REE Operating System (REE OS) on the REE. The TEE OS is solidified in the terminal when delivery, and cannot be modified while in use, so that the TEE OS cannot be modified by malicious software, and is safe. Currently, the REE OS usually adopts an Android system, a Windows Phone system, and the like.

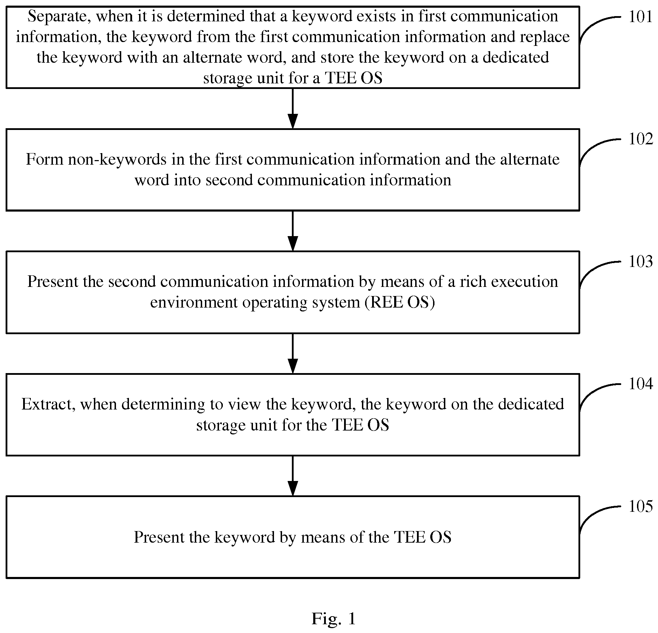

Fig. 1 is a flow chart of a first embodiment of a method for protecting a keyword in communication information according to the present disclosure. As shown in Fig. 1, the method for protecting a keyword in communication information provided by the embodiment of the present disclosure may include the following steps.

In step 101, when determining that a keyword exists in first communication information, the keyword is separated from the first communication information and replaced with an alternate word, and the keyword is stored on a dedicated storage unit for a TEE OS.

When determining that the keyword exists in the first communication information, the terminal for protecting a keyword in communication information separates the keyword from the first communication information, replaces the keyword with the alternate word, and stores the keyword on the dedicated storage unit for the TEE OS that can be accessed by the TEE OS only.

For instance, when the TEE OS of the terminal determines that the keyword, such as a verification code, exists in the first communication information, the TEE OS of the terminal separates the verification code from the first communication information, replaces the verification code with an alternate code, and stores the verification code on the dedicated storage unit for the TEE OS that can be accessed by the TEE OS only.

In step 102, a non-keyword in the first communication information and the alternate word are formed into second communication information.

The non-keyword in the first communication information and the alternate word are formed into the second communication information by the terminal for protecting a keyword in communication information, wherein the second communication information at least includes related information such as position information of the keyword on the storage unit and marker information of the keyword.

For instance, a content in the first communication information excluding the verification code and the alternate code are formed into the second communication information by the TEE OS of the terminal, wherein the second communication information at least includes related information such as position information of the verification code on the storage unit for the TEE OS and marker information of the verification code.

In step 103, the second communication information is presented through a rich execution environment operating system REE OS.

The second communication information is presented through the rich execution environment operating system REE OS by the terminal for protecting a keyword in communication information.

For instance, the TEE OS of the terminal sends the second communication information to the REE OS, and the REE OS presents the second communication information on an operating screen of the terminal for a user to view.

In step 104, when determining to view the keyword, the keyword on the dedicated storage unit for the TEE OS is extracted.

When determining to view the keyword, the keyword on the dedicated storage unit for the TEE OS is extracted by the terminal for protecting a keyword in communication information. For instance, the TEE OS of the terminal, when determining that the user clicks the marker information of the verification code and wants to view the verification code, extracts the verification code from the dedicated storage unit for the TEE OS through the position information of the verification code on the storage unit for the TEE OS.

In step 105, the keyword is presented through the TEE OS.

The keyword is presented through the TEE OS by the terminal for protecting a keyword in communication information. In particular, the alternate word in the second communication information may be replaced with the keyword, and the keyword may be presented through the TEE OS.

For instance, the TEE OS of the terminal presents the verification code through the operating screen of the terminal for the user to view the verification code.

According to the method for protecting a keyword in communication information provided by the embodiments of the present disclosure, when determining that the keyword exists in first communication information, the keyword is separated from the first communication information, replaced with the alternate word, and stored on the dedicated storage unit for the trusted execution environment operating system TEE OS; the non-keyword in the first communication information and the alternate word are formed into the second communication information, the second communication information is presented through the rich execution environment operating system REE OS; when determining to view the keyword, the keyword on the dedicated storage unit for the TEE OS is extracted; and the keyword is presented through the TEE OS; therefore, the keyword in the communication information can be only stored and read in the TEE OS; because the TEE OS is solidified in the terminal while delivery and cannot be modified when in use, the TEE OS cannot be modified by the malicious software; in this way, even if the REE OS is controlled by the malicious software, the keyword in the communication information cannot be stolen, thus thoroughly cutting off the possibility of stealing the keyword in the communication information by the malicious software.

In order to embody the objects of the present disclosure better, further examples are given on the basis of the above embodiments.

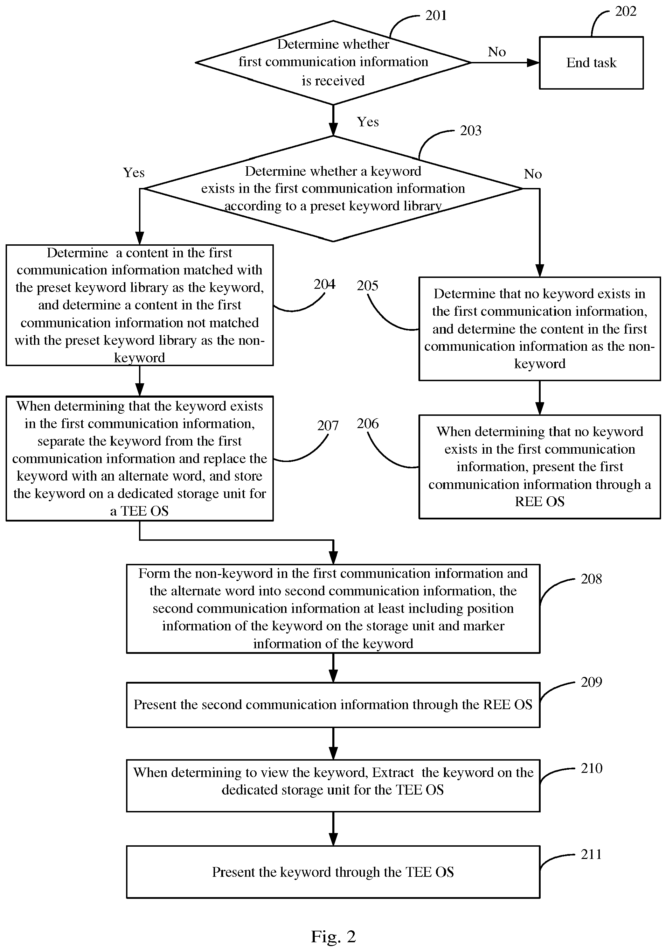

Fig. 2 is a flow chart of a second embodiment of a method for protecting a keyword in communication information according to the present disclosure. As shown in Fig. 2, the method for protecting a keyword in communication information provided by the embodiment of the present disclosure may include the following steps.

In step 201, it is determined whether first communication information is received.

In the embodiment of the present disclosure, it is illustrated by taking a smart phone installed with a TEE OS and a REE OS as the terminal for protecting a keyword in communication information and a short message as the communication information for example.

The TEE OS of the smart phone determines whether a short message is received; if determining that the short message is not received, step 202 is performed; and if determining that the short message is received, step 203 is performed.

In step 202, a task is ended.

The TEE OS of the smart phone ends a processing task.

In step 203, it is determined whether a keyword exists in the first communication information according to a preset keyword library.

To be specific, it is determined whether a content in the first communication information is matched with a content in the preset keyword library; if the content in the first communication information is matched with the content in the preset keyword library, then step 204 is performed; and if the content in the first communication information is not matched with the content in the preset keyword library, then step 205 is performed.

The TEE OS of the smart phone determines whether a content in the short message is matched with the content in the preset keyword library; if the content in the short message is matched with the content in the preset keyword library, then step 204 is performed; and if the content in the short message is not matched with the content in the preset keyword library, then step 205 is performed. The preset keyword library is a keyword library set by a smart phone manufacturer or set according to user requirements, and may be stored in the TEE OS of the smart phone in a form of table, list, etc. The detailed storage content of the preset keyword library may be set according to the actual requirements, and will not be defined herein.

For instance, it is illustrated by using an example in which the keyword with a verification code and a numeral and/or alphabetic keyword after the verification code is stored in the keyword library. The TEE OS of the smart phone judges whether the verification code and the numeral and/or alphabetic keyword after the verification code exist in the content of the short message; if determining that the verification code and the numeral and/or alphabetic keyword after the verification code exit in the content of the short message, step 204 is performed; and if determining that the verification code and the numeral and/or alphabetic keyword after the verification code do not exist in the content of the short message, step 205 is performed.

In step 204, a content in the first communication information matched with the preset keyword library is determined as the keyword, and a content in the first communication information not matched with the preset keyword library is determined as the non-keyword. The TEE OS of the smart phone determines the verification code and the numeral and/or alphabetic keyword after the verification code in the short message which are matched with the preset keyword library as the keyword, and determines the content in the short message which is not matched with the preset keyword library as the non-keyword; and then, step 207 is performed.

In step 205, it is determined that no keyword exists in the first communication information, and the content in the first communication information is determined as the non-keyword. The TEE OS of the smart phone determines that no content of the verification code and the numeral and/or alphabetic keyword after the verification code exists in the short message, and determines the content in the short message as the non-keyword; and then, step 206 is performed.

In step 206, when determining that no keyword exists in the first communication information, the first communication information is presented through the REE OS.

The TEE OS of the smart phone, when determining that no content of the verification code and the numeral and/or alphabetic keyword after the verification code exists in the short message, sends the short message to the REE OS of the smart phone, and presents the short message through the REE OS; to be specific, the REE OS of the smart phone, after receiving the short message sent from the TEE OS, sends the short message to a short message application, and the short message application parses and displays the short message.

In step 207, when determining that the keyword exists in the first communication information, the keyword is separated from the first communication information and replaced with an alternate word, and the keyword is stored on a dedicated storage unit for the TEE OS.

The TEE OS of the smart phone, when determining that the content of the verification code and the numeral and/or alphabetic keyword after the verification code exists in the short message; separates the verification code and the numeral and/or alphabetic keyword after the verification code from the short message, and replaces the verification code and the numeral and/or alphabetic keyword after the verification code with an alternate word corresponding to the keyword in the preset keyword library, and then stores the verification code and the numeral and/or alphabetic keyword after the verification code on the dedicated storage unit for the TEE OS. For instance, a "verification code: 26987a" is replaced with a "verification code: XXXXXX", and then, the "verification code: 26987a" is stored on the dedicated storage unit for the TEE OS.

Because the dedicated storage unit for the TEE OS can be accessed and read by the TEE OS only, and cannot be accessed and read by malicious software, it can be ensured that the information stored on the dedicated storage unit for the TEE OS cannot be stolen.

In step 208, the non-keyword in the first communication information and the alternate word are formed into second communication information, the second communication information at least including position information of the keyword on the storage unit and marker information of the keyword.

The TEE OS of the smart phone forms the modified short message using the content of the non-keyword in the short message and the alternate word of the "verification code: XXXXXX", wherein the content of the "verification code: XXXXXX" in the modified short message includes the corresponding position information of the "verification code: 26987a" stored on the dedicated storage unit for the TEE OS, the marker information of the "verification code: 26987a", and the like. The marker information may prompt the user that the content is the replaced content, which may be viewed by clicking; for instance, the content may be marked by way of underline, typeface color, or the like.

In step 209, the second communication information is presented through the REE OS.

The TEE OS of the smart phone sends the modified short message to the REE OS of the smart phone, and presents the modified short message through the REE OS; to be specific, the REE OS of the smart phone, after receiving the modified short message sent from the TEE OS, sends the modified short message to the short message application, and the short message application parses and displays the short message.

In step 210, when determining to view the keyword, the keyword on the dedicated storage unit for the TEE OS is extracted.

When the REE OS of the smart phone determines that the user clicks the replaced content in the modified short message on the operating screen, i.e., when the user wants to view the keyword, the REE OS sends an instruction for viewing the keyword to the TEE OS, and the TEE OS extracts the keyword on the dedicated storage unit for the TEE OS according to the instruction.

For instance, when the REE OS determines that the user clicks the "verification code: XXXXXX" in the modified short message on the operating screen, i.e., the REE OS sends an instruction for viewing the "verification code: 26987a" to the TEE OS, and the TEE OS extracts the information of the "verification code: 26987a" on the dedicated storage unit for the TEE OS according to the instruction.

In step 211, the keyword is presented through the TEE OS.

The TEE OS of the terminal presents the "verification code: 26987a" that the user wants to view through the operating screen for the user to view.

According to the method for protecting a keyword in communication information provided by the embodiments of the present disclosure, it is determined whether the first communication information is received, and if determining that the first communication information is received, it is determined whether the keyword exists in the first communication information according to the preset keyword library; if the content in the first communication information is not matched with the content in the preset keyword library, it is determined that no keyword exists in the first communication information, and the content in the first communication information is determined as the non-keyword, and the first communication information is presented through the REE OS; if the content in the first communication information is matched with the content in the preset keyword library, the content in the first communication information matched with the preset keyword library is determined as the keyword, and the content in the first communication information not matched with the preset keyword library is determined as the non-keyword, and when determining that the keyword exists in the first communication information, the keyword is separated from the first communication information and replaced with the alternate word, and stored on the dedicated storage unit for the trusted execution environment operating system TEE OS; the non-keyword in the first communication information and the alternate word are formed into the second communication information, the second communication information at least including the position information of the keyword on the storage unit and the marker information of the keyword; the second communication information is presented through the rich execution environment operating system REE OS; when determining to view the keyword, the keyword on the dedicated storage unit for the TEE OS is extracted; and the keyword is presented through the TEE OS; through the method, the keyword in the communication information can be only stored and read in the TEE OS; because the TEE OS is solidified in the terminal while delivery and cannot be modified when in use, the TEE OS cannot be modified by the malicious software; in this way, even if the REE OS is controlled by the malicious software, the keyword in the communication information cannot be stolen, thus thoroughly cutting off the possibility of stealing the keyword in the communication information by the malicious software.

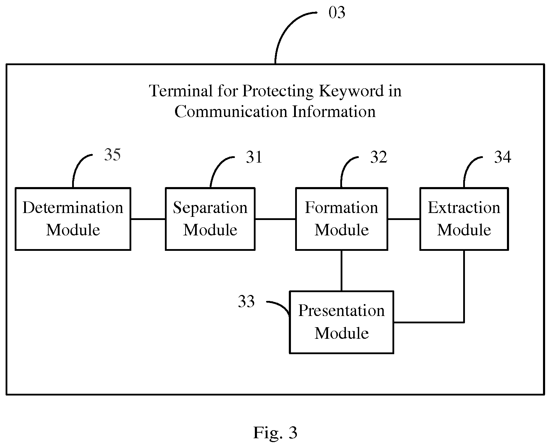

The embodiments of the present disclosure provide a terminal for protecting a keyword in communication information. Fig. 3 is a structural schematic diagram of an embodiment of a terminal for protecting a keyword in communication information according to the present disclosure. As shown in Fig. 3, the terminal 03 for protecting a keyword in communication information provided by the embodiments of the present disclosure includes: a separation module 31, a formation module 32, a presentation module 33 and an extraction module 34. The separation module 31 is configured to, when determining that a keyword exists in first communication information, separate the keyword from the first communication information and replace the keyword with an alternate word, and store the keyword on a dedicated storage unit for a trusted execution environment operating system TEE OS.

The formation module 32 is configured to form a non-keyword in the first communication information and the alternate word into second communication information, the second communication information at least including position information of the keyword on the storage unit and marker information of the keyword.

The presentation module 33 is configured to present the second communication information through a rich execution environment operating system REE OS.

The extraction module 34 is configured to extract, when determining to view the keyword, the keyword on the dedicated storage unit for the TEE OS.

The presentation module 33 is further configured to present the keyword through the TEE OS.

Further, the terminal further includes: a determination module 35.

The determination module 35 is configured to determine whether the first communication information is received, and if determining that the first communication information is received, determine whether the keyword exists in the first communication information according to a preset keyword library.

Further, the determination module 35 is specifically configured to determine whether a content in the first communication information is matched with a content in the preset keyword library, and if the content in the first communication information is matched with the content in the preset keyword library, determine the content in the first communication information matched with the preset keyword library as the keyword, and determine a content in the first communication information not matched with the preset keyword library as a non-keyword; and
if no content in the first communication information is matched with the content in the preset keyword library, determine that no keyword exists in the first communication information, and determine the content in the first communication information as the non-keyword.

Further, the presentation module 33 is further configured to, when determining that no keyword exists in the first communication information, present the first communication information through the REE OS.

Further, the presentation module 33 is further specifically configured to replace the alternate word in the second communication information with the keyword, and present the keyword through the TEE OS.

The terminal of the embodiment may be configured to implement the technical solution of the foregoing method embodiments, and the implementation principle and the technical effect of the terminal are similar to those of the method embodiments, which will not be elaborated herein.

During practical application, the separation module 31, the formation module 32, the presentation module 33, the extraction module 34 and the determination module 35 may all be implemented through a Central Processing Unit (CPU), a Micro Processor Unit (MPU), a Digital Signal Processor (DSP) or a Field Programmable Gate Array (FPGA) in the terminal for protecting a keyword in communication information.

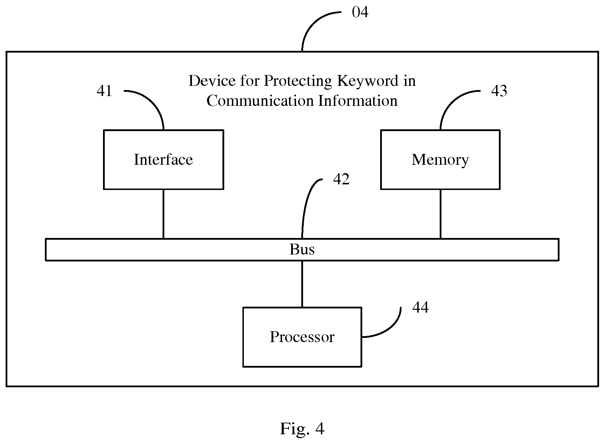

The embodiments of the present disclosure provide a device for protecting a keyword in communication information. Fig. 4 is a structural schematic diagram of an embodiment of the device for protecting a keyword in communication information according to the present disclosure. As shown in Fig. 4, the device 04 for protecting a keyword in communication information provided by the embodiment of the present disclosure includes an interface 41, a bus 42, a memory 43 and a processor 44. The interface 41, the memory 43 and the processor 44 are connected through the bus 42. The memory 43 is configured to store an instruction, and the processor 44 reads the instruction and uses the instruction to:
when determining that a keyword exists in first communication information, separate the keyword from the first communication information and replace the keyword with an alternate word, and store the keyword on a dedicated storage unit for a trusted execution environment operating system TEE OS;
form a non-keyword in the first communication information and the alternate word into second communication information, the second communication information at least including position information of the keyword on the storage unit and marker information of the keyword;
present the second communication information through a rich execution environment operating system REE OS;
when determining to view the keyword, extract the keyword on the dedicated storage unit for the TEE OS; and
present the keyword through the TEE OS.

Further, the processor 44 reads the instruction and further uses the instruction to:
determine whether the first communication information is received, and if determining that the first communication information is received, determine whether the keyword exists in the first communication information according to a preset keyword library.

Further, the processor 44 reads the instruction and specifically uses the instruction to:
determine whether a content in the first communication information is matched with a content in the preset keyword library, and if the content in the first communication information is matched with the content in the preset keyword library, determine the content in the first communication information matched with the preset keyword library as the keyword, and determine a content in the first communication information not matched with the preset keyword library as the non-keyword; and
if no content in the first communication information is matched with the content in the preset keyword library, determine that no keyword exists in the first communication information,
and determine the content in the first communication information as the non-keyword.

Further, the processor 44 reads the instruction and further uses the instruction to:
when determining that no keyword exists in the first communication information, present the first communication information through the REE OS.

Further, the processor 44 reads the instruction and further specifically uses the instruction to: replace the alternate word in the second communication information with the keyword, and present the keyword through the TEE OS.

The device of the embodiment may be configured to implement the technical solution of the foregoing method embodiments, and the implementation principle and the technical effect of the device are similar to those of the method embodiments, which will not be elaborated herein.

The embodiments of the present disclosure also provide a storage medium. Optionally, the above storage medium in the embodiment may be configured to store program codes for executing the following steps:
S1: when determining that a keyword exists in first communication information, separating the keyword from the first communication information and replacing the keyword with an alternate word, and storing the keyword on a dedicated storage unit for a trusted execution environment operating system TEE OS;
S2: forming a non-keyword in the first communication information and the alternate word into second communication information, the second communication information at least including position information of the keyword on the storage unit and marker information of the keyword;
S3: presenting the second communication information through a rich execution environment operating system REE OS;
S4: when determining to view the keyword, extracting the keyword on the dedicated storage unit for the TEE OS; and
S5: presenting the keyword through the TEE OS.

Optionally, the above storage medium is further configured to store program codes for executing the following steps:
S 1: determining whether the first communication information is received before determining that the keyword exists in the first communication information, and if determining that the first communication information is received, determining whether the keyword exists in the first communication information according to a preset keyword library.

Optionally, in the embodiment, the above-mentioned storage medium may include, but is not limited to: any medium that is capable of storing program codes such as a USB disk, a Read-Only Memory (ROM), a Random Access Memory (RAM), a mobile hard disk, a magnetic disk or an optical disk.

Those skilled in the art will appreciate that embodiments of the present disclosure can be provided as a method, a system, or a computer program product. Accordingly, the present disclosure can take the form of a hardware embodiment, a software embodiment, or a combination embodiment of software and hardware. Moreover, the present disclosure can take the form of a computer program product embodied on one or more computer usable storage media (including but not limited to disk storage and optical storage, etc.) in which computer usable program codes are included.

The present disclosure has been described with reference to the flow charts and/or block diagrams of the method, device (system), and computer program products according to the embodiments of the present disclosure. It should be appreciated that each flow and/or block in the flow charts and/or block diagrams, and combinations of the flows and/or blocks in the flow charts and/or block diagrams can be implemented by computer program instructions. These computer program instructions may be provided to a general purpose computer, a special purpose computer, an embedded processor, or a processor of other programmable data processing device to produce a machine for the instructions executed by the computer or the processor of other programmable data processing device to generate an apparatus for implementing the functions specified in one or more flows of the flow chart and/or in one or more blocks of the block diagram.

These computer program instructions may also be provided to a computer-readable memory that can guide the computer or other programmable data processing device to work in a given manner, so that the instructions stored in the computer-readable memory generate a product including an instruction apparatus that implements the functions specified in one or more flows of the flow chart and/or in one or more blocks of the block diagram.

These computer program instructions may also be loaded to a computer, or other programmable data processing device, so that a series of operating steps are executed on the computer, or other programmable data processing device to produce processing implemented by the computer, so that the instructions executed in the computer or other programmable data processing device provide steps for implementing the functions specified in one or more flows of the flow chart and/or in one or more blocks of the block diagram.

The above description is merely preferred embodiments of the invention, but is not intended to limit the protection scope of the present disclosure.

### INDUSTRIAL APPLICABILITY

In the embodiments of the present disclosure, when determining that the keyword exists in the first communication information, the keyword is separated from the first communication information, replaced with the alternate word, and stored on the dedicated storage unit for a TEE OS; the non-keyword in the first communication information and the alternate word are formed into the second communication information, the second communication information through is presented through the rich execution environment operating system REE OS; when determining to view the keyword, the keyword on the dedicated storage unit for the TEE OS is extracted; and the keyword is presented through the TEE OS; therefore, the keyword in the communication information can be only stored and read in the TEE OS; because the TEE OS is solidified in the terminal while delivery and cannot be modified when in use, the TEE OS cannot be modified by the malicious software; in this way, even if the REE OS is controlled by the malicious software, the keyword in the communication information cannot be stolen, thus thoroughly cutting off the possibility of stealing the keyword in the communication information by the malicious software.

## Claims

1. A method for protecting a keyword in communication information, comprising:
when determining that a keyword exists in first communication information, separating the keyword from the first communication information and replacing the keyword with an alternate word, and storing the keyword on a dedicated storage unit for a trusted execution environment operating system TEE OS;
forming a non-keyword in the first communication information and the alternate word into second communication information, the second communication information at least comprising position information of the keyword on the storage unit and marker information of the keyword;
presenting the second communication information through a rich execution environment operating system REE OS;
extracting, when determining to view the keyword, the keyword on the dedicated storage unit for the TEE OS; and
presenting the keyword through the TEE OS.

2. The method according to claim 1, wherein the method, before the determining that the keyword exists in the first communication information, further comprises:
determining whether the first communication information is received, and if determining that the first communication information is received, determining whether the keyword exists in the first communication information according to a preset keyword library.

3. The method according to claim 2, wherein the determining whether the keyword exists in the first communication information according to the preset keyword library comprises:
determining whether a content in the first communication information is matched with a content in the preset keyword library, and if the content in the first communication information is matched with the content in the preset keyword library, determining the content in the first communication information matched with the preset keyword library as the keyword, and determining a content in the first communication information not matched with the preset keyword library as the non-keyword; and
if no content in the first communication information is matched with the content in the preset keyword library, determining that no keyword exists in the first communication information, and determining the content in the first communication information as the non-keyword.

4. The method according to claim 2, wherein, the method, after the determining whether the keyword exists in the first communication information according to the preset keyword library, further comprises:
when determining that no keyword exists in the first communication information, presenting the first communication information through the REE OS.

5. The method according to any one of claims 1 to 4, wherein the presenting the keyword through the TEE OS comprises:
replacing the alternate word in the second communication information with the keyword, and presenting the keyword through the TEE OS.

6. A terminal for protecting a keyword in communication information, comprising:
a separation module configured to, when determining that a keyword exists in first communication information, separate the keyword from the first communication information and replace the keyword with an alternate word, and store the keyword on a dedicated storage unit for a trusted execution environment operating system TEE OS;
a formation module configured to form a non-keyword in the first communication information and the alternate word into second communication information, the second communication information at least comprising position information of the keyword on the storage unit and marker information of the keyword;
a presentation module configured to present the second communication information through a rich execution environment operating system REE OS; and
an extraction module configured to extract, when determining to view the keyword, the keyword on the dedicated storage unit for the TEE OS;
wherein the presentation module is further configured to present the keyword through the TEE OS.

7. The terminal according to claim 6, further comprising:
a determination module configured to determine whether the first communication information is received, and if determining that the first communication information is received, determine whether the keyword exists in the first communication information according to a preset keyword library.

8. The terminal according to claim 7, wherein the determination module is configured to determine whether a content in the first communication information is matched with a content in the preset keyword library, and if the content in the first communication information is matched with the content in the preset keyword library, determine the content in the first communication information matched with the preset keyword library as the keyword, and determine a content in the first communication information not matched with the preset keyword library as the non-keyword; and
if no content in the first communication information is matched with the content in the preset keyword library, determine that no keyword exists in the first communication information, and determine the content in the first communication information as the non-keyword.

9. The terminal according to claim 7, wherein the presentation module is further configured to, when determining that no keyword exists in the first communication information, present the first communication information through the REE OS.

10. The terminal according to any one of claims 6 to 9, wherein the presentation module is further configured to replace the alternate word in the second communication information with the keyword, and present the keyword through the TEE OS.
